# EUROPEAN PATENT SPECIFICATION

(11) **EP 1 275 303 B1**
(45) Date of publication and mention of the grant of the patent: **22.11.2006**
(21) Application number: 02009328.2
(22) Date of filing: 02.05.2002
(51) Int. Cl.: A21C 11/12, A21D 13/08, A21C 9/06

(54) **Method for continuous production of semiprocessed products for three-dimensional, starch-containing snacks, and snacks obtained with the method**
Methode zur kontinuierlichen Herstellung von Zwischenprodukten für dreidimensionale, stärkehaltige Snackprodukte, und damit herstellbare Snackprodukte
Méthode de production continue de produits semi-fabriqués pour snacks trois-dimensionels contenant de l'amidon, et snacks préparés avec cette méthode

(30) Priority: 19.06.2001 IT PD20010149
(43) Date of publication of application: 15.01.2003
(73) Proprietor: Mafin S.P.A., 35015 Galliera Veneta (IT)
(72) Inventor: Pavan, Stefano, 35018 San Martino di Lupari (IT)
(74) Representative: Modiano, Micaela Nadia

(56) References cited:
- WO-A-88/06849
- WO-A-98/47393
- IT-A- TV 940 045
- IT-A- TV 940 059
- US-A- 5 161 458
- US-A- 6 165 530

## Description

The present invention relates to a method for continuous production of semiprocessed products for three-dimensional snacks made of cereals, mixtures of cereals and/or mixtures of cereals with starches, potato flours or the like, and to three-dimensional snacks obtained with the method.

Many kinds of snack are currently commercially popular; among these, snacks obtained from cereals, tubers or similar foodstuffs, obtained by cooking by frying in oil and available in sealed packages in groceries and the like, in places of businesses such as bars, cafeterias, pubs, et cetera, are particularly noteworthy.

In recent times, in particular, three-dimensional snacks produced by coupling perimetrically two sheets of a semiprocessed gelled compound obtained by extruding humidified mixtures of potatoes, cereals and/or other starch-containing foodstuffs, are enjoying a large increase in sales.

A method, disclosed in EP-305451, is already known for the production of such snacks.

This method entails preparing a semiprocessed compound of humidified mixtures of cereals and/or other starch-containing ingredients, forming two uniform gauged sheets, forming a layered material by contact of the two sheets, passing in a region for die-cutting the sheets (so as to form pellets having a preset shape) and joining the edges, and cooking the pellets so as to generate steam between the two layers in order to obtain the expansion and three-dimensionality of the product.

Although it is an improvement over previous methods, the above described method entails drawbacks, particularly with reference to the quality of the finished product obtained thereby, which are due in particular to the adhesive and sticky properties of the compound to be processed.

A particularly important drawback that has been noted is that during die-cutting the mutually superimposed sheets very easily stick to each other, even completely, due to their stickiness.

Accordingly, during cooking the snack does not expand uniformly, with rather poor aesthetic and qualitative results.

The aim of the present invention is to provide a method for the continuous production of semiprocessed products for three-dimensional snacks made of cereals, mixtures of cereals and/or mixtures of cereals with starches or the like, and three-dimensional snacks obtained with the method, which allows to eliminate the drawbacks noted above in known production methods.

Within this aim, an object of the invention is to provide a method that allows to produce semiprocessed products for snacks in which the cooking oil is allowed to expand uniformly the thickness of the walls of the sheets in order to fry such snacks uniformly and make them very fragrant.

Another object is to provide a method that facilitates and enhances the three-dimensional shaping of the snacks.

Another object is to provide a method that produces snacks that are better and more fragrant than currently commercially available ones.

Another object is to provide a method that allows to produce three-dimensional snacks with production costs that are competitive with respect to conventional ones.

This aim and these and other objects that will become better apparent hereinafter are achieved by a method for the continuous production of semiprocessed products for three-dimensional snacks made of cereals, mixtures of cereals and/or mixtures of cereals with starches, potato flours or the like, which comprises the steps of:
-- preparing two sheets of a gelled compound of said components and/or other starch-containing ingredients;
-- making surface incisions in the sheets without cutting through them;
-- stretching the sheets after making the incisions, making them accumulate visco-elastic energy;
-- superimposing the sheets and cutting them with dies, which join them at the edges formed by die-cutting, forming, in combination with an air jet that pushes the sheets against the walls of the dies, tension-free semiprocessed products having a preset three-dimensional shape.

Advantageously, there is a subsequent step for at least partial drying of the semiprocessed products, stabilizing their shape.

The semiprocessed products are then cooked by frying them, obtaining the snacks.

Further characteristics and advantages of the invention will become better apparent from the detailed description of the steps of the method, given hereinafter by way of non-limitative example.

The method for the continuous production of semiprocessed products for three-dimensional snacks made of cereals, mixtures of cereals and/or mixtures of cereals with starches, potato flours or the like is illustrated in the sole accompanying drawing, wherein a production apparatus is shown.

In a first step, two sheets 1 and 2 of a compound preferably based on corn, optionally mixed with other cereals and/or potato flours and/or starches, are prepared, such sheets being highly gelled, feature that enhances their elasticity characteristics.

The sheet 1 is passed between a first incision roller 3a and a first support and contrast roller 3b, producing a surface incision with closely spaced parallel lines without cutting through the sheet.

In an equivalent manner, the sheet 2 is passed between a second incision roller 4a and a second contrast roller 4b, where a corresponding surface incision with closely spaced parallel lines is produced without cutting through the sheet.

Each one of the two sheets 1 and 2 thus processed passes between two tensioning rollers, designated by the reference numerals 5a and 5b for the sheet 1 and by the reference numerals 6a and 6b for the sheet 2.

The tensioning elongates the sheets 1 and 2, making them accumulate visco-elastic energy.

In a subsequent step, the sheets 1 and 2 are moved mutually closer and pass through a die-cutting station 7, which comprises a die-cutting roller 7a and a complementary die-cutting roller 7b, wherein the first roller 7a has a surface with hollow molds that join the two sheets 1 and 2 along preset lines and cut them.

In this die-cutting station 7 there is a blower 8, which generates an air stream that propels the sheets against the walls of the molds that are present on the roller 7a, thus obtaining tension-free pellets 9 having a predefined three-dimensional shape.

The air jet helps the sheets to adhere to the walls of the molds, helping to preform them in a half-shell shape before they are joined along closed perimeters and then cut.

The pellets 9 are collected by a conveyor belt 10, which conveys them to a pneumatic conveyor 11, which sends them to a drying station that allows to obtain stable pellets constituted by two dried half-shells which are cambered and joined along the edges and have external surface incisions that do not cut through them.

The die-cutting waste 12 is collected and conveyed to a pneumatic conveyor 13, which sends it to recirculation.

The final step is constituted by cooking the pellets by frying them (so as to obtain the snacks), the pellets expanding due to:
-- the complete release of the visco-elastic tensions accumulated during formation (which occurs when the viscosity of the gelatin is lower, since it is heat-sensitive)
-- the overpressure generated by the overheating of the air trapped during die-cutting
-- the overheating of the trapped air.

As an alternative, the cooking step can be performed directly after die-cutting, thus avoiding drying.

It is also possible to provide a step for cooking in an air oven as an alternative to frying.

In practice it has been observed that the intended aim and objects of the present invention have been achieved.

The drawbacks suffered in the methods used hitherto, and particularly adhesion of the inside walls of the snacks, have in fact been eliminated.

In particular, the non-through incisions allow the oil to uniformly expand the thickness of the wall, which thus becomes very fragrant, at the same time reaching the layers that are closest to the inner layer, which remains less cooked, thus giving the product a pleasant crispiness.

The incisions also decorate the surface of the snack.

Moreover, tensioning is aimed at avoiding the mutual sticking of the inner faces of the semiprocessed product, which after die-cutting move mutually apart due to the release of the tension.

The pellet expands due to the complete release of tension and the simultaneous overheating of the air trapped between the two sheets.

The invention thus conceived is susceptible of numerous modifications and variations, all of which are within the scope of the inventive concept.

In practice, the materials employed, so long as they are compatible with the contingent use, as well as the dimensions, may be any according to requirements.

The disclosures in Italian Patent Application No. PD2001A000149 from which this application claims priority are referred to.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

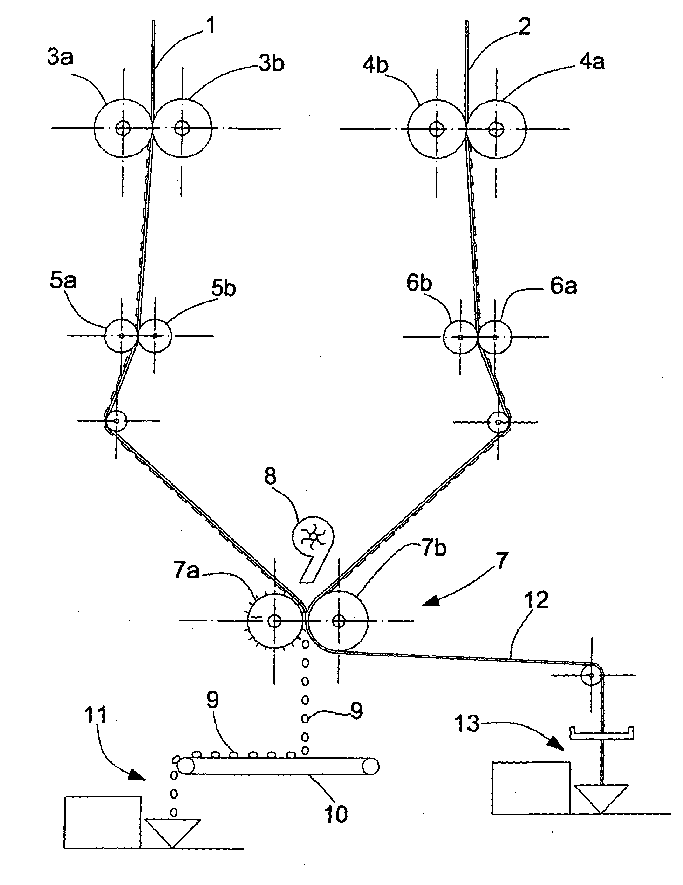

## Claims

1. A method for the continuous production of semiprocessed products for three-dimensional snacks made of cereals, mixtures of cereals and/or mixtures of cereals with starches or potato flours comprising the steps of:
-- preparing two sheets of a gelled compound of said components and/or other starch-containing ingredients;
-- making surface incisions in the sheets without cutting through them;
-- stretching the sheets after making the incisions, making them accumulate visco-elastic energy;
-- superimposing the sheets and cutting them with appropriate dies, which join them at the edges formed by die-cutting, forming, in combination with an air jet that pushes the sheets against the walls of the dies, tension-free semiprocessed products having a preset shape.

2. The method according to claim 1, **characterized in that** said semiprocessed products are dried at least partially, stabilizing their shape.

3. The method according to claim 1 or 2, **characterized in that** said semiprocessed products are cooked.

4. The method according to claim 3, **characterized in that** said cooking consists in frying.

5. The method according to claim 3, **characterized in that** said cooking is performed in an air oven.

6. The method according to claim 1, **characterized in that** said non-through surface incision has parallel lines.

7. A semiprocessed product for three-dimensional snacks made of potatoes or cereals produced with a method according to one or more of the preceding claims, **characterized in that** it comprises two dried half-shells which are cambered and joined at their edges.

8. A semiprocessed product for three-dimensional snacks made of potatoes or cereals or the like according to claim 7, **characterized in that** said half-shells have non-through incisions.

## Patentansprüche

1. Verfahren zur kontinuierlichen Herstellung von Vorprodukten für dreidimensionale Snack-Produkte aus Zerealien, Mischungen von Zerealien und/oder Mischungen von Zerealien mit Stärken oder Kartoffelmehlen mit den folgenden Schritten:
- Anfertigung zweier Lagen einer gelierten Zusammensetzung der genannten Bestandteile und/oder anderer Stärke enthaltender Inhaltsstoffe;
- Vornahme von Einstichen in den Lagen, ohne sie durchzuschneiden;
- Strecken der Lagen nach Vornahme der Einstiche, damit sie viskoelastische Energie ansammeln können;
- Übereinanderlegen und Schneiden der Lagen mit geeigneten Formen, welche sie an den durch Formschneiden, Umformen in Verbindung mit einem die Lagen gegen die Wände der Formen drückenden Luftstrom gebildeten Kanten verbinden, wobei spannungsfrei hergestellte Vorprodukte mit einer vorgegebenen Form gebildet werden.

2. Verfahren nach Anspruch 1, **dadurch gekennzeichnet, dass** die Vorprodukte wenigstens teilweise getrocknet werden, wodurch ihre Form stabilisiert wird.

3. Verfahren nach Anspruch 1 oder 2, **dadurch gekennzeichnet, dass** die Vorprodukte zubereitet werden.

4. Verfahren nach Anspruch 3, **dadurch gekennzeichnet, dass** die Zubereitung in Braten besteht.

5. Verfahren nach Anspruch 3, **dadurch gekennzeichnet, dass** die Zubereitung in einem Umluftofen stattfindet.

6. Verfahren nach Anspruch 1, **dadurch gekennzeichnet, dass** die die Oberfläche nicht durchstechenden Einstiche aus parallelen Linien bestehen.

7. Vorprodukt für dreidimensionale Snack-Produkte aus Kartoffeln oder Zerealien, das mit einem Verfahren nach einem oder mehreren der vorhergehenden Ansprüche hergestellt wird, **dadurch gekennzeichnet, dass** es zwei getrocknete Halbschalen aufweist, die an ihren Kanten gewölbt und verbunden sind.

8. Vorprodukt für dreidimensionale Snack-Produkte aus Kartoffeln oder Zerealien nach Anspruch 7, **dadurch gekennzeichnet, dass** die Halbschalen nicht durchgehende Einstiche aufweisen.

## Revendications

1. Procédé pour la production continue de produits semi-traités pour des amuse-gueules en trois dimensions constitués de céréales, de mélanges de céréales et/ou de mélanges de céréales avec des amidons ou des farines de pommes de terre, comprenant les étapes consistant à :
- préparer deux feuilles d'un composé en gel desdits composants et/ou d'autres ingrédients contenant de l'amidon ;
- réaliser des incisions de surface dans les feuilles sans couper celles-ci de part en part ;
- étirer les feuilles après la réalisation des incisions, de façon à leur faire accumuler de l'énergie visco-élastique ;
- superposer les feuilles et les couper à l'aide d'emporte-pièces appropriés qui réunissent celles-ci aux bords formés par la coupe à l'emporte-pièce, en formant, en combinaison avec un jet d'air qui pousse les feuilles contre les parois des emporte-pièces, des produits semi-traités exempts de tension ayant une forme pré-établie.

2. Procédé selon la revendication 1, **caractérisé en ce que** lesdits produits semi-traités sont séchés au moins partiellement, de façon à stabiliser leur forme.

3. Procédé selon la revendication 1 et 2, **caractérisé en ce que** lesdits produits semi-traités sont cuits.

4. Procédé selon la revendication 3, **caractérisé en ce que** ladite cuisson consiste en une friture.

5. Procédé selon la revendication 3, **caractérisé en ce que** ladite cuisson est effectuée dans un four à air.

6. Procédé selon la revendication 1, **caractérisé en ce que** ladite incision de surface non-pénétrante comporte des lignes parallèles.

7. Produit semi-traité pour des amuse-gueules en trois dimensions constitués de pommes de terre ou de céréales produit à l'aide d'un procédé selon l'une ou plusieurs des revendications précédentes, **caractérisé en ce qu'**il comprend deux demi-coques séchées qui sont cambrées et réunies à leurs bords.

8. Produit semi-traité pour des amuse-gueules en trois dimensions constitués de pommes de terre ou de céréales selon la revendication 7, **caractérisé en ce que** lesdites demi-coques comportent des incisions non-traversantes.
